Europäisches Patentamt

European Patent Office

Office européen des brevets

(19)

(11) Publication number: 0 364 088
A2

## (12) EUROPEAN PATENT APPLICATION

(21) Application number: 89308456.6

(51) Int. Cl.5: G01P 21/02

(22) Date of filing: 21.08.89

(30) Priority: 09.09.88 GB 8821125

(43) Date of publication of application:
18.04.90 Bulletin 90/16

(84) Designated Contracting States:
BE DE ES FR IT

(71) Applicant: WESTINGHOUSE BRAKE AND
SIGNAL HOLDINGS LIMITED
Pew Hill
Chippenham Wiltshire(GB)

(72) Inventor: Kent, John
Newlands Pound Street
Petworth West Sussex GU27 0DY(GB)

(74) Representative: Newstead, Michael John et al
Page & Co. Temple Gate House Temple Gate
Bristol BS1 6PL(GB)

(54) Wheel diameter calibration for a railway vehicle.

(57) There is a disclosed a railway system comprising a railway track; a railway vehicle (1) for travelling on the track, the vehicle having a tachometer (13) which produces pulses at a rate dependent on the speed of rotation of a wheel of the vehicle; and

first and second beacons (C, B) adjacent the track and spaced apart along the track. The vehicle is provided with an arrangement comprising means for detecting automatically the first and second devices in response to the detecting means passing them, the distance between the point of detection of the first device and the point of detection of the second device being a known distance; means for deriving automatically a count representing the number of pulses from the tachometer between the points of detection; and

means for comparing automatically said count with the number of pulses which should be derived from the tachometer for travel over said distance by a wheel of a nominal diameter, to produce a wheel diameter compensation value.

FIG.1

## WHEEL DIAMETER CALIBRATION FOR A RAILWAY VEHICLE

The present invention relates to wheel diameter calibration for a railway vehicle. The present invention may be applied to the automatic correction of the output counts of a tachometer of a railway vehicle in order that speed and/or distance may be accurately calculated with correction for changes in wheel diameter due to wheel wear and wheel turning.

A tachometer attached to an axle of a railway vehicle has been used with manually settable correction for wheel diameter, in order to display speed to the driver of such a vehicle, and the correction setting is only adjusted when the wheels of a particular axle associated with the tachometer have been removed from the vehicle for maintenance purposes, or for turning down to remove flats due to wheelslide.

Modern railway rolling stock is being designed to incorporate advanced microprocessor based control and data capture systems working in association with a through-train data bus communication network to control passenger information and driver advisory equipment. Such systems require precise positional data, which have previously been provided by means of trackside transponders or inductive loops. The provision of such devices is expensive in both capital and maintenance costs, and does not meet the requirement for flexibility necessitated by such as temporary speed restrictions, and schedule changes, or for the precise position recording of fault or unusual events.

A solution to the above difficulties would be a distance measuring device driven by a wheel tachometer with an accuracy at least two orders of magnitude better than available from current equipment. However, in order that this possibility could be realised, it is necessary to provide means for providing data to the on train control system such that an automatic compensation for wheel diameter variations can be in made in arriving at final speed and/or distance data.

According to the present invention there is provided a railway system comprising:-

a) a railway track;

b) a railway vehicle for travelling on the track, the vehicle having a tachometer which produces pulses at a rate dependent on the speed of rotation of a wheel of the vehicle; and

c) first and second devices in or adjacent the track and spaced apart along the track, wherein the vehicle is provided with an arrangement comprising:-

i) means for detecting automatically the first and second devices in response to the detecting means passing them, the distance between the point of detection of the first device and the point of detection of the second device being a known distance;

ii) means for deriving automatically a count representing the number of pulses from the tachometer between the points of detection; and

iii) means for comparing automatically said count with the number of pulses which should be derived from the tachometer for travel over said distance by a wheel of a nominal diameter, to produce a wheel diameter compensation value.

Preferably, the system includes a third such device in or adjacent the track, the second device being intermediate the first and third devices and the distance between the point of detection by said detecting means of the second device and the point of detection by said detecting means of said third device being the same as said known distance, said deriving means being arranged for deriving said count from the mean of the number of pulses from the tachometer between detecting the first and second devices and the number of pulses from the tachometer between detecting the second and third devices.

Each of said devices could comprise an infra-red beam emitting beacon, said detecting means comprising infra-red detecting means. Preferably, each of the beacons emits at least two infra-red beams, spaced one above the other and meeting substantially at said detecting means in use of system.

The present invention will now be described, by way of example, with reference to the accompanying drawings, in which:-

Figure 1 shows schematically a railway train and three trackside beacons;

Figure 2 shows one of the beacons;

Figure 3 shows circuitry in a beacon;

Figures 4a) and 4b) show respectively waveforms from a pulse generator and an oscillator of Figure 3; and

Figure 5 is a block diagram showing railway vehicle mounted circuitry.

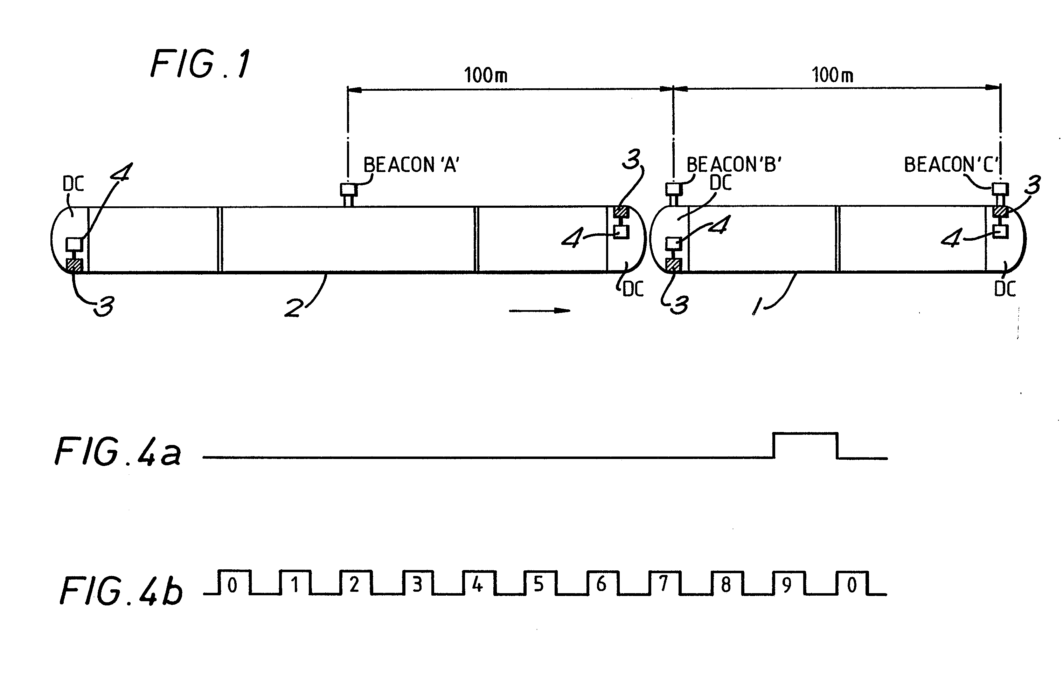

In Figure 1, reference numerals 1 and 2 denote two vehicles of a railway train travelling in the direction of the arrow. At each end of each of vehicles 1 and 2 is a driver's cab DC, each cab having an infra-red detector 3 and a control unit 4, the unit 4 in the forward cab of the leading vehicle (1) being used as a master unit. Three trackside beacons A, B and C are provided, with a clearance between each beacon and the train of approximately 500 millimetres, with a distance between beacons A and B of 100 metres and with a distance between beacons B and C of 100 metres.

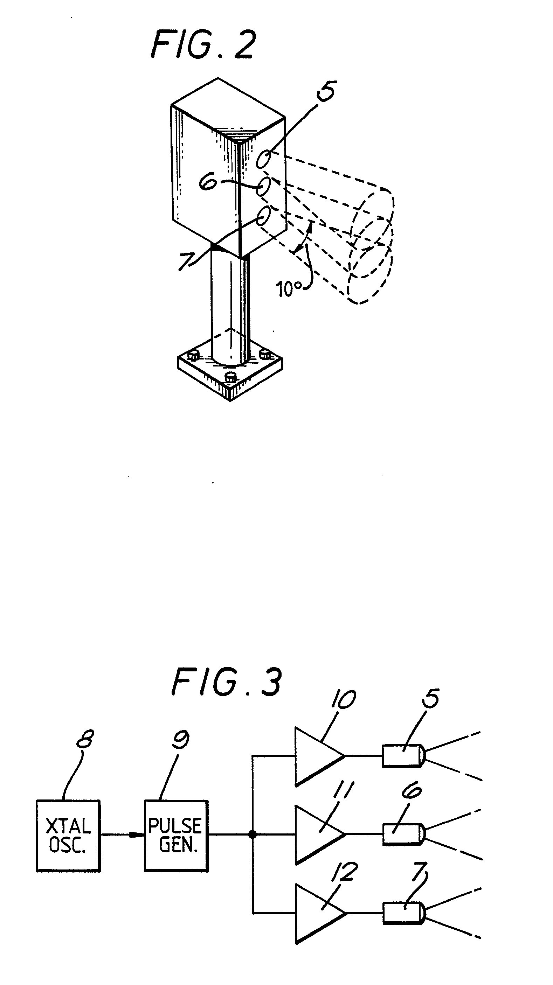

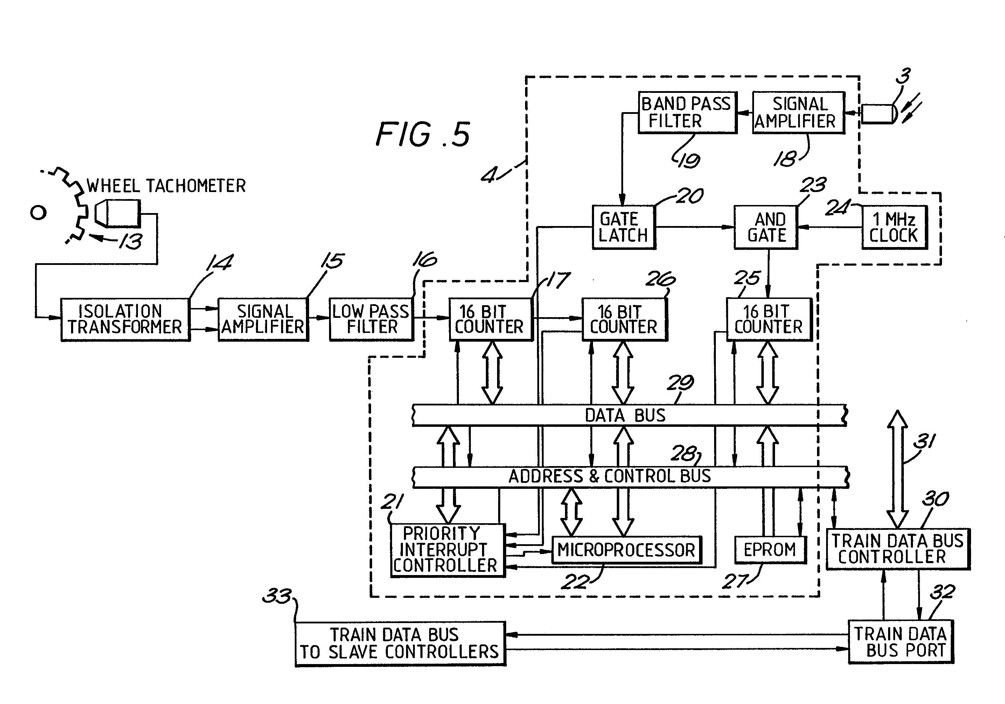

Referring to Figure 2, each of beacons A, B and C has three infra-red emitters 5, 6 and 7 disposed one above the other and producing three narrow infra-red beams such that the edges of the upper and lower beams meet at the clearance distance to be detected by the detector 3 in the forward cab of the leading vehicle, to produce at the detector a narrow beam in the direction of travel of the train but a beam which is wide enough in the vertical direction to compensate for variations in detector height due to vehicle loading or rolling. Also, this provides for a protection against failure of a single emitter. Typically, each emitter has a beam angle of 10°. The output of each of the emitters 5, 6 and 7 is pulsed with a 10% active output at a fixed frequency in the range from 10kHz to 50kHz in order to provide greater output power from the emitter during the 10% on period. This is achieved in each beacon by a crystal oscillator 8 whose output feeds a pulse generator 9 (derived using a Johnson counter) the output of which feeds the emitters 5, 6 and 7 via amplifiers 10, 11 and 12 respectively. The output of pulse generator 9 is shown in Figure 4a) and the output of oscillator 8 is shown in Figure 4b). Thus, the emitter outputs are modulated at a frequency which is one tenth of the frequency of oscillator 8 and, typically, the modulation frequency for beacon A is 10kHz, the modulation frequency for beacon B is 13kHz and the modulation frequency for beacon C is 16kHz.

Referring to Figure 4, each wheel tachometer 13 of a vehicle is coupled via an isolation transformer 14, a signal amplifier 15 and a low pass filter 16 to a 16-bit counter 17 in the control unit 4 of the vehicle. The output of each detector 3 is connected via a signal amplifier 18 and a bandpass filter 19 to the input of a gate latch 20 in the associated control unit 4. One output of the latch 20 is fed to a priority interrupt controller 21 (whose output is connected to a microprocessor 22), another output of latch 20 being connected to an input of an AND gate 23, the other input of which is connected to an output of a 1MHz clock 24. The output of AND gate 23 is fed to an input of a 16-bit counter 25 whose output is fed to another input of the controller 21. The output of counter 17 is fed to an input of another 16-bit counter 26 which has an output connected to another input of the controller 21. Reference numeral 27 denotes an erasable programmable read only memory (EPROM), reference numeral 28 denotes an address and control bus and reference numeral 29 denotes a data bus which, for controlling the train, carries "speed set and coasting advisory" information. Reference numeral 30 denotes a train data bus controller which interfaces via a bus 31 with the train management system, the controller 30 being provided with a train data bus port 32 connected via a train data bus 33 to slave controllers of the train.

The above described arrangement of three beacons A, B and C is installed at several key points in the overall railway network, and operation of the system is as follows.

On passing one of the beacons A, B and C, the detector 3 in the forward cab of the leading vehicle produces a resultant output signal which is amplified in amplifier 18 and filtered in filter 19 to eliminate spurious triggering. The frequency is checked within the band pass limits, and then the number of pulses received within a given gate period, say 5mS, are counted. The detector system is interrogated by the microprocessor 22 at the termination of the gate period and the resultant count then compared with a look-up table in the microprocessor memory. If the count falls within the limits for a frequency selected for wheel calibration, then the controlling microprocessor 22 (in the unit 4 of the forward cab of the leading vehicle) will instruct, by means of the train data bus 33, all other controllers on the train to start counting incoming tachometer wheel pulses until a further valid wheel calibration emitter beacon frequency is detected, at which point the count from the first beacon (C) to the second beacon (B) will be stored by the system, and a second count started between the second beacon (B) and the third beacon (A). The two results will then be totalled and divided by two to provide a mean tachometer pulse count over the nominal inter-beacon distance of 100 metres.

In the proposed realisation, the three beacons are modulated at different frequencies within the overall bandwidth of the band-pass filter 19 so that the train equipment will be able to identify each of the three beacons. In the event of a complete failure of a beacon, it will be possible to calibrate between any two remaining beacons, and at the same time provide a fault report to be logged in an on train data monitor, but more importantly, it will permit health monitoring of the beacons to detect deterioration in performance, and raise a fault report before complete failure occurs. Thus, one half of the count between beacons C and A, or the count between beacons B and A or the count between beacons C and B could be used.

The tachometer would generate a known pulse count per nominal metre of wheel circumference, say 200 pulses per metre. With the beacons accurately positioned at 100 metre intervals, then if the wheels were on nominal diameter, the tachometer would generate 20,000 pulses between detecting the first beacon (C) and the second (B). If the wheels of the axle to which the tachometer is fitted are small by 1%, then the number of pulses generated between the beacons would be 20,200 and any speed and/or distance measurement, and/or assumed value of wheel diameter, and/or actual tachometer pulse count would be reduced by multiplying by a factor equal to:

$$\frac{20000}{20200} = 0.9901$$

It is necessary for each tachometer on the train to be calibrated independently as wheel diameters on different axles may vary considerably, and using the train data bus 33 to initiate the count on each tachometer means that only the infra-red detector 4 in the controlling vehicle will have to be powered up, and will only have to be fitted to one side of the vehicle, with the emitter beacons and the detector always on the same side of the track.

Data related to the wheel diameter compensation factor will be recorded in an on train monitor recorder each time the unit is powered up, and each time a wheel diameter calibration takes place. This information will enable wheel diameters to be monitored for maintenance purposes, and also to ensure that the calibration is consistent.

Several safeguards need to be built into the system to obviate incorrect calibration due to wheelslide or wheelspin. In the event of the acceleration or deceleration rate exceeding a preset level (dependent on the motoring and braking characteristics of the rolling stock) and the vehicle being in the process of a wheel calibration, then that calibration would be aborted; and depending on whether the slide or spin occurred between the first and second beacons, or between the second and third beacons, then the count for one pair of beacons only will be used for the wheel compensation factor; or if both calibration factors fail for whatever reason, then the previous compensation factor will continue as the current factor until a successful calibration occurs, and the failure, and the reason for the failure, will be recorded for later analysis.

A further development of this system would use additional trackside beacons at critical points to specify different locations for cross-checking the on board equipment, and these additional infra-red beacons would be similar to the calibration beacons, but would be installed singularly, and would have a different identifying modulation frequency.

As an alternative to the infra-red beacon system described above, it would also be possible to use inductive loops as beacons, or ultra-sonic transponders, but in either case it would be necessary to increase the inter-beacon distance by a factor of ten to ensure that the detection distance variation possible with either of these alternatives would bear the same proportion to the total inter-beacon count as a narrow infra-red beam.

## Claims

1. A railway system comprising:-
   a) a railway track;
   b) a railway vehicle for travelling on the track, the vehicle having a tachometer which produces pulses at a rate dependent on the speed of rotation of a wheel of the vehicle; and
   c) first and second devices in or adjacent the track and spaced apart along the track, wherein the vehicle is provided with an arrangement comprising:-
   i) means for detecting automatically the first and second devices in response to the detecting means passing them, the distance between the point of detection of the first device and the point of detection of the second device being a known distance;
   ii) means for deriving automatically a count representing the number of pulses from the tachometer between the points of detection; and
   iii) means for comparing automatically said count with the number of pulses which should be derived from the tachometer for travel over said distance by a wheel of a nominal diameter, to produce a wheel diameter compensation value.

2. A system according to claim 1, including a third such device in or adjacent the track, the second device being intermediate the first and third devices and the distance between the point of detection by said detecting means of the second device and the point of detection by said detecting means of the third device being the same as said known distance, said deriving means being arranged for deriving said count from the mean of the number of pulses from the tachometer between detecting the first and second devices and the number of pulses from the tachometer between detecting the second and third devices.

3. A system according to claim 1 or claim 2, wherein each of said devices comprises an infra-red beam emitting beacon and said detecting means comprises infra-red detecting means.

4. A system according to claim 3, wherein each of said beacons emits at least two infra-red beams, spaced one above the other and meeting substantially at said detecting means in use of the system.

5. A system according to claim 3 or claim 4, wherein each of said beacons includes means for modulating the or each beam of the beacon at a frequency respective to the beacon.

6. A system according to any preceding claim, wherein said arrangement includes a microprocessor for controlling its operation.

## FIG.1

100m

100m

BEACON 'A'

BEACON 'B'

BEACON 'C'

DC

DC

DC

DC

DC

4

3

3

4

4

3

4

3

2

1

EP 0 364 088 A2

## FIG.4a

## FIG.4b

0  1  2  3  4  5  6  7  8  9  0

# FIG. 2

# FIG. 3

FIG .5

WHEEL TACHOMETER

BAND PASS FILTER

SIGNAL AMPLIFIER

3

4

19

18

13

GATE LATCH

20

AND GATE

23

1 MHz CLOCK

24

ISOLATION TRANSFORMER

14

SIGNAL AMPLIFIER

15

LOW PASS FILTER

16

16 BIT COUNTER

17

16 BIT COUNTER

26

25

16 BIT COUNTER

DATA BUS

29

ADDRESS & CONTROL BUS

28

PRIORITY INTERRUPT CONTROLLER

21

MICROPROCESSOR

22

EPROM

27

TRAIN DATA BUS CONTROLLER

30

31

TRAIN DATA BUS TO SLAVE CONTROLLERS

33

TRAIN DATA BUS PORT

32

EP 0 364 088 A2